# EUROPEAN PATENT SPECIFICATION

(11) **EP 3 039 165 B1**
(45) Date of publication and mention of the grant of the patent: **16.06.2021**
(21) Application number: 14841054.1
(22) Date of filing: 27.08.2014
(51) Int. Cl.: C22C 18/00, C22C 18/02, C22C 38/00, C22C 38/44, B32B 15/01

(54) **REDUCED CONDUCTIVITY AND UNIQUE ELECTROMAGNETIC SIGNATURE ZINC ALLOY**
ZINKLEGIERUNG MIT REDUZIERTER LEITFÄHIGKEIT UND EINZIGARTIGER ELEKTROMAGNETISCHER SIGNATUR
CONDUCTIVITÉ RÉDUITE ET ALLIAGE DE ZINC À SIGNATURE ÉLECTROMAGNÉTIQUE UNIQUE

(30) Priority: 27.08.2013 US 201361870485 P
(43) Date of publication of application: 06.07.2016
(73) Proprietor: Artazn LLC, Greeneville, TN 37745 (US)
(72) Inventor: DELSORBO, Carl, R., Greeneville, TN 37745 (US); BEETS, Randy, Bulls Gap, TN 37711 (US); KETNER, William, Lee, Jonesborough, TN 37659 (US); KYAW, David, Vernon, Greeneville, TN 37745 (US)
(74) Representative: Style, Kelda Camilla Karen
(86) International application number: PCT/US2014/052969
(87) International publication number: WO 2015/031509

(56) References cited:
- EP-A1- 0 899 349
- EP-A1- 0 899 349
- EP-A2- 0 269 006
- JP-A- H0 941 057
- JP-A- H10 168 533
- JP-A- 2001 049 370
- JP-A- 2007 084 869

## Description

### CROSS REFERENCE TO RELATED APPLICATION

This application claims the benefit and priority of U.S. provisional patent application number 61/870,485, filed on August 27, 2013.

### BACKGROUND

Various metals are used in the coinage, electrical and electronics markets with each metal having unique properties. Rolled and die cast zinc products have been long standing product offerings in these markets. The various base metal zinc alloys currently on the market have measured electrical conductivity values in the range of 25% to 30% IACS based on the International Annealed Copper Standard (IACS) which uses substantially pure copper as a 100% conductivity reference (100% IACS). These conventional zinc alloy electrical conductivity values, although providing certain unique electrical properties, have limited zinc alloys from broader use in coinage, electrical and electronics markets.

In the coinage market, the electrical conductivity and permeability of the metal provides a unique electromagnetic signature that is used for security purposes. This electromagnetic signature provides an additional source of security in coin differentiation systems used in both the vending and banking industries. The more common metals and alloys used in this industry, such as low carbon steels, stainless steels, nickel, copper, brasses, bronzes, cupronickel, aluminum bronze, and aluminum, have electrical conductivities either at or below 15% IACS or above 25% IACS.

There is a range from 15% to 25% IACS in which a cost-effective metal or alloy could provide a unique range of electromagnetic signatures to provide additional security options for new or redesigned coinage products. In addition, a more cost-effective zinc metal or alloy option that can duplicate the electromagnetic signature of an existing coinage product can provide a more economical solution to the coinage market while maintaining current coin differentiation parameters.

In the electrical and electronics market, the effective range of electrical conductivity of a material, along with other properties, can limit its use. By expanding this effective range, the ease and/or cost of production can be improved for existing uses and the range of applications for that material can also be expanded. Currently, rolled zinc alloys have been used in the automotive fuse market, as well as for shielding applications from electromagnetic and radio frequency interference and counterpoise grounding applications all utilizing the zinc alloys conventional electrical conductivity property range. Expanding the current effective electrical conductivity range for rolled zinc products would allow for additional uses in these existing markets as well as expand the use of zinc alloys for additional applications within this industry.

### SUMMARY

Coins should inherently be lower in cost than their stated value to prevent destruction and manipulation of the coins for monetary gain. Zinc base alloys provide a low cost base metal from which to produce coinage which is less likely to be destroyed for its inherent material value than more costly metals.

Coins can be identified as genuine by many methods including coin design features, color, size, weight and shape, but are increasingly identified by their unique electromagnetic properties. This allows for quick and accurate authentication by machines. These properties are inherent within the base metal or are an artifact of a combination of the base metal and plated or coated surfaces, base metal and clad materials, and/or inclusion in a bi-metal coin system (two piece coin).

A range of new zinc alloys has been developed that has lower electrical conductivity than conventional zinc alloys thereby providing a wider and more unique range of electromagnetic properties. This broadens current security options in coins.

EP0269006A2 discloses a method of forming a colored zinc coating on an iron or steel surface in which base metal of iron or steel is hot-dipped in a bath of or sprayed with a zinc alloy.

EP0899349A1 discloses a heat-resistant zinc alloy exhibiting good creep resistance even at a temperature of not less than 100°C.

According to the invention, there is provided an article made of an alloy, the alloy comprising: manganese in the amount of from 0.01% to 2% by weight; copper in the amount of 0.1% to 1.2% by weight; the balance zinc; and optionally one or more of: aluminum in the amount of 0.001% to 0.60% by weight; magnesium in the amount of 0.0001% to 0.50% by weight; titanium in the amount of 0.050% to 1.0% by weight; chromium in the amount of 0.0001% to 0.50% by weight; iron in the amount of 0.0001% to 0.50% by weight; antimony in the amount of 0.0001% to 0.50% by weight; and/or cadmium in the amount of 0.0001% to 0.50% by weight; wherein the alloy has an electrical conductivity in the range of 12 to 25% IACS, and wherein the article is a coin, token, or fuse. The invention is limited to this alloy.

The article may comprise a plating layer over said alloy.

A further advantage of this new range of conductivity of zinc alloys is a series of alloys with controllable conductivity for applications in electrical and electronic markets. The alloy may be produced as a rolled product or in a traditional die casting process for various applications.

As noted above, current rolled zinc strip alloys and die cast zinc materials have a limited conductivity range of 25% to 30% IACS. This limits their use in both the coinage, electrical and electronics markets. The alloys described herein expand the effective conductivity range and electromagnetic signature of rolled and die cast zinc products allowing for expansion of use in current markets and application into new markets.

### BRIEF DESCRIPTION OF THE DRAWINGS

In the drawings:
Fig. 1 is a graph depicting the effect on electrical conductivity of a zinc based alloy by the addition of manganese to zinc;
Fig. 2 is a graph similar to Fig. 1 depicting the expanded effect on electrical conductivity of a zinc based alloy by the addition of manganese and additional alloying agents;
Fig. 3 is a series of plots derived from a coin sorting machine depicting the electromagnetic signatures of two zinc-manganese alloys formulated as described herein and compared with five other common coinage materials; and
Fig. 4 is a schematic perspective view of a blade fuse having a fuse wire constructed with a zinc-manganese alloy.

### DETAILED DESCRIPTION

A range of new zinc based alloys has been produced which contain manganese in the weight range of 0.01 to 2.0 percent for reducing the electrical conductivity of zinc. The alloys also comprise copper in the amount of 0.1% to 1.2% in weight. These alloys show unique properties, most notably, an electrical conductivity lower than typical zinc and zinc alloys produced as strip. Alloys containing zinc, manganese and other elements were tested. That is, alloys of zinc and manganese in the weight range noted above were combined with copper in the amount of 0.1 % to 1.2% by weight, and in some examples stabilizing agents such as: aluminum in the amount of 0.001 % to 0.60% by weight, titanium in the amount of 0.050% to 1.0% by weight, magnesium in the amount of 0.0001% to 0.050% by weight, cadmium in the amount 0.0001% to 0.50% by weight, chromium in the amount of 0.0001% to 0.50% by weight, iron in the amount of 0.0001% to 0.50% by weight and antimony in the amount of 0.0001% to 0.50% by weight. Stabilization refers to the ability of the zinc manganese alloy to maintain a substantially constant IACS conductivity overtime and over varying temperature conditions. Any variation is referred to as "drift.

Copper in the amount of 0.1% to 1.2% by weight is added as a hardener to a zinc manganese alloy of 0.05% to 2% by weight manganese, balance zinc. Titanium, magnesium, cadmium and chromium serve as grain refiners to produce smaller grains in the zinc manganese alloy and form intermetallic compounds which resist conductivity drift.

Titanium not only serves as a grain refiner in the zinc manganese alloy, it also lowers the IACS conductivity of the zinc alloy in its as cast state. Moreover, by adding titanium to the alloy, conductivity drift is reduced at any given level of manganese. A useful weight range of titanium is 0.05% to 1% by weight of the alloy.

Testing has shown that the IACS test results places the conductivity of these new alloys in the range of 12% to 25% of IACS. Again, zinc alloys generally lie in the range of 25% to 30% of IACS. The conductivity of the alloys can be controlled with secondary effects based on rolling, heat treating and plating practice yielding processes for creating a range of electronic signatures within the zinc and manganese alloy system. This range of conductivity is unique compared to general commercial alloys of common metals.

The ability to significantly adjust the conductivity of a zinc based alloy with small amounts of manganese has many potential applications. This unique conductivity space of the alloy initially provides two potential applications. The first is in the production of coinage with a unique electromagnetic signature (EMS). Coins for purposes of sorting or vending are often identified within a machine by a variety of criterion. The first is the physical parameters such as size and weight that are clearly evident and generally easy to copy. But the electro-magnetic signature of a coin consisting of a base metal that may or may not have one or more plated layers, can be unique.

As described further below, the second application for this new range of low conductivity alloys is within the electronics and fuse market, where the protective value of the fuse (amperage at the point of planned failure) is controlled by conductivity and geometry. Typically, a fuse is designed from a particular alloy and then the geometry is changed to control the final fuse value. In some cases, it is desirable to make a fuse for low amperage control, but which is complicated by the ability to reliably produce small geometric cross-sections. An alloy of 50% lower conductivity would allow more manufacturability within the fuse industry.

The key to this controlled conductivity is dominated by the quantity of manganese in the zinc, but the full range of potential alloys possible may need exploration to best control the space. Alloys with 0 to 2% by weight of manganese balance zinc, and preferably 0 to 1% by weight of manganese balance zinc have been found to produce conductivity in ranges not previously achievable but do not belong to the present invention. The addition of copper to the zinc-manganese alloys acts as a hardener in the range of 0.1 to 1.2 weight percent. This addition increases the hardness without adverse affects on adjustment of conductivity by the manganese content in the zinc. Elements that fall in this grouping of increasing hardness and/or strength of zinc-manganese alloys include copper and further titanium, magnesium, aluminum, chromium, iron, antimony and/or cadmium. These elements also act as stabilizing agents to prevent IACS drift.

A cast alloy of zinc and manganese exhibits a certain initial conductivity. When rolled into a coil, the conductivity increases by 3% to 4% on the IACS scale. By adjusting the rolling process to roll at a lower metal temperature, the increase in conductivity can be minimized to 1% to 2% IACS. Lower annealing temperature can also have an effect on lowering the conductivity of rolled alloys.

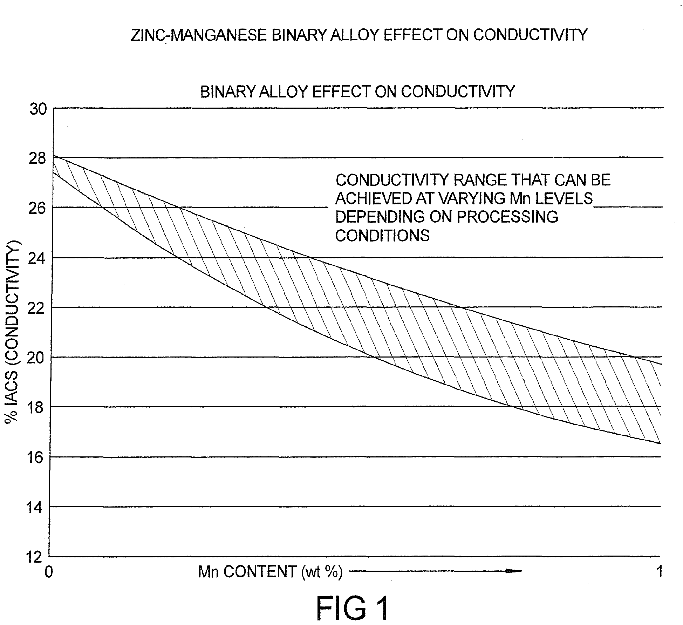

As shown in Fig. 1, an exemplary binary alloy of zinc and manganese in the range of 0.0 to 1.0% manganese produces a vast range of conductivities. This binary alloy is described as an example that does not fall within the scope of the claimed invention. The addition of manganese trends to lower conductivity. However, with variation in processing conditions, such as rolling and plating practice, a range of conductivities can be produced at varying manganese levels. The lower boundary of the plot in Fig. 1 represents the as cast alloy conductivity while the upper boundary of the plot represents the alloy conductivity after an aging process at 220°F producing a drift of 5% IACS. Noticeable effects on the conductivity of zinc can be seen beginning around 0.01% by weight manganese and clearly at 0.05% by weight manganese. These alloys contain from 0.01% up to 2% manganese, balance zinc, and more preferably 0.05% manganese up to 2% manganese balance zinc. More desirable effects on conductivity can be achieved with 0.05% to 1.0% by weight manganese, balance zinc. Of course, additional stabilizing agents such as those noted above can be added to any of these zinc-manganese alloys.

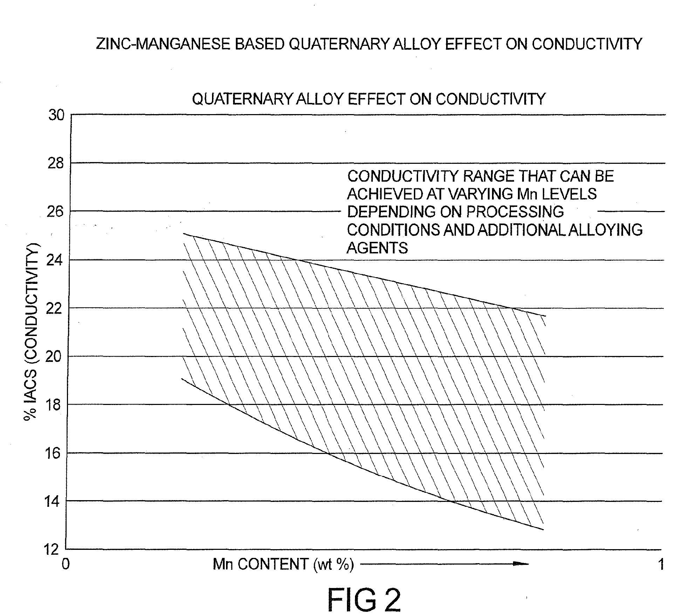

As noted above, the electrical conductivity of a zinc-manganese alloy can be further modified with the introduction of stabilizing agents into the binary zinc-manganese alloys. As observed in Fig. 2, a larger range of conductivities can be produced with the addition of, for example, two of the stabilizing agents noted above, thereby forming a quaternary alloy with zinc and manganese. In this example, copper and titanium were added in the ranges noted herein to the zinc-manganese alloy as described herein. Further expansion of the potential conductivity ranges can be achieved with varying the alloy processing conditions. The lower boundary curve again represents the conductivity of the as-cast alloy and the upper boundary represents the conductivity of the alloy based on varying process parameters and alloying agents.

The conductivity of a material is a strong driver in many parameters of the material's electromagnetic signature (EMS). Adjusting the conductivity of the base alloy for a through-alloy coin or plated coin will impact the EMS of the coin and drive towards unique signals that can be used to differentiate a coin from other coins or slugs.

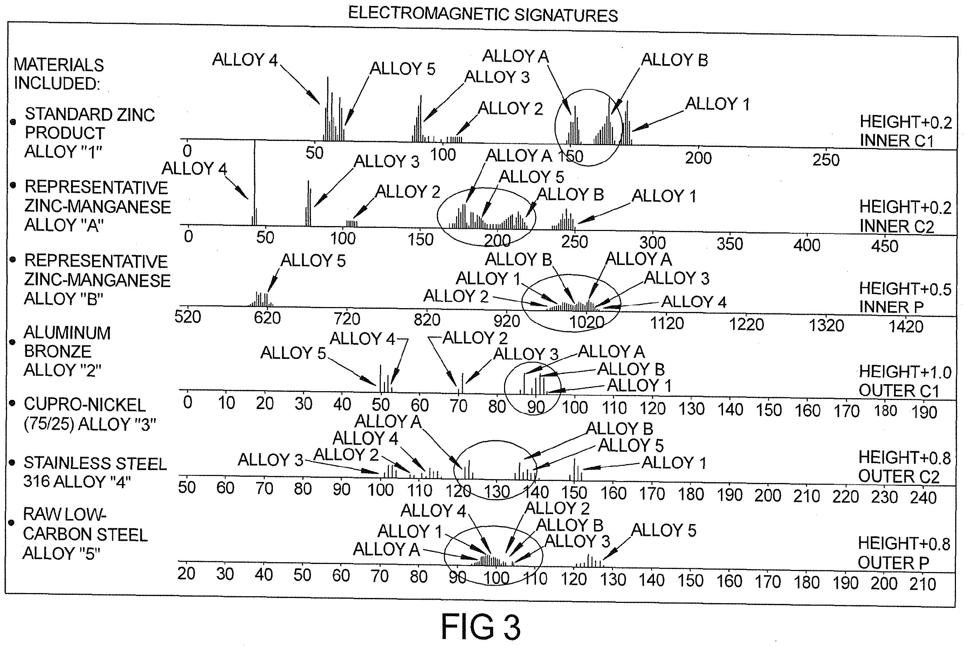

Blanks from two different representative zinc-manganese alloys were produced and coined using a common token die. These blanks were run through a coin sorting machine common to the industry (ScanCoin 4000) and the data compared to other common base or through alloy materials used in coinage production, such as aluminum, bronze, cupronickel, stainless steel material and low carbon steel. The output data is shown in Fig. 3. Differences from other materials in only one of these variables or in the dimensions of the coin is all that is required to consider a product unique. Differences in more than one characteristic strengthens the security of the coinage product. These zinc-manganese based alloys can create unique electromagnetic signatures as compared to most commonly used metals used in the coinage market. The signals circled in the plots in Fig. 3 highlight the different EMS signatures which can be used to differentiate coinage for security purposes.

As noted above, a second application for these lower conductivity alloys is within the electronics and fuse markets, where the protective value of the component is often controlled by conductivity and geometry, such as the amperage at the point of planned failure in a low-voltage blade fuse. An electronic component, being a fuse in the present invention, would be designed from a particular alloy and then the geometry would be changed to control the final resistance or conductivity value required. In the case of a fuse used for low amperage control, the manufacturability is complicated by the geometric cross-section required due to the inherent conductivity of the standard zinc alloys used.

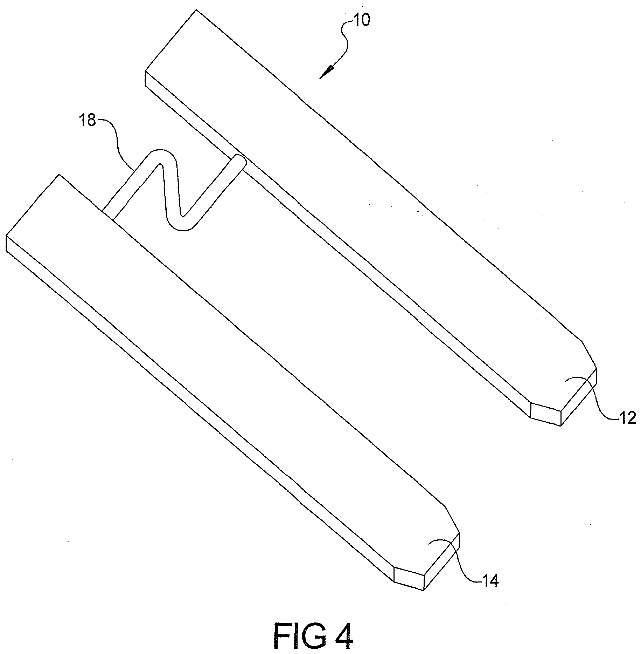

A schematic example of a fuse 10 is shown in Fig. 4 wherein two electrical blade leads 12, 14 are connected by a thinner cross-sectional area element 18. Element 18 and/or the entire fuse 10 can be constructed from any of the zinc-manganese alloys described herein. Because of the higher electrical resistance of the zinc-manganese alloys, the element 18 can be increased in cross-sectional area to produce the same resistance as a smaller conventional fuse element. Reducing conductivity of the fuse 10 and/or element 18 metal allows for an increase in cross-sectional area of the element of a fuse to maintain an amperage rating which can aide in manufacturing. Increasing the cross-sectional area of the element can also result in increased reliability and consistency of performance.

It will be appreciated by those skilled in the art that the above reduced conductivity and unique electromagnetic signature zinc alloy is merely representative of the many possible embodiments of the invention and that the scope of the invention should not be limited thereto, but instead should only be limited according to the following claims.

## Claims

1. An article made of an alloy, the alloy comprising:
manganese in the amount of from 0.01% to 2% by weight;
copper in the amount of 0.1% to 1.2% by weight;
the balance zinc;
and optionally one or more of:
aluminum in the amount of 0.001% to 0.60% by weight;
magnesium in the amount of 0.0001% to 0.50% by weight;
titanium in the amount of 0.050% to 1.0% by weight;
chromium in the amount of 0.0001% to 0.50% by weight;
iron in the amount of 0.0001% to 0.50% by weight;
antimony in the amount of 0.0001% to 0.50% by weight, and/or
cadmium in the amount of 0.0001% to 0.50% by weight,
wherein the alloy has an electrical conductivity in the range of 12 to 25% IACS,
and wherein the article is a coin, token, or fuse.

2. The article of claim 1, further comprising a plating layer over said alloy.

## Patentansprüche

1. Aus einer Legierung gemachter Gegenstand, wobei die Legierung aufweist:
Mangan in einer Menge von 0,01 bis 2 Gew.-%;
Kupfer in einer Menge von 0,1 bis 1,2 Gew.-%;
der Rest Zink;
und optional ein oder mehr von:
Aluminium in einer Menge von 0,001 bis 0,60 Gew.-%;
Magnesium in einer Menge von 0,0001 bis 0,50 Gew.-%;
Titan in einer Menge von 0,050 bis 1,0 Gew.-%;
Chrom in einer Menge von 0,0001 bis 0,50 Gew.-%;
Eisen in einer Menge von 0,0001 bis 0,50 Gew.-%;
Antimon in einer Menge von 0,0001 bis 0,50 Gew.-%; und/oder
Cadmium in einer Menge von 0,0001 bis 0,50 Gew.-%,
wobei die Legierung eine elektrische Leitfähigkeit im Bereich von 12 bis 25% IACS aufweist,
und wobei der Gegenstand eine Münze, ein Token oder eine Sicherung ist.

2. Gegenstand nach Anspruch 1, ferner aufweisend eine Plattierungsschicht über der Legierung.

## Revendications

1. Article composé d'un alliage, l'alliage comprenant :
du manganèse dans une quantité de 0,01 % à 2 % en poids ;
du cuivre dans une quantité de 0,1 % à 1,2 % en poids ;
du zinc pour le reste,
et comprenant éventuellement l'un ou plusieurs de ces éléments :
de l'aluminium dans une quantité de 0,001 % à 0,60 % en poids ;
du magnésium dans une quantité de 0,0001 % à 0,50 % en poids ;
du titane dans une quantité de 0,050 % à 1,0 % en poids ;
du chrome dans une quantité de 0,0001 % à 0,50 % en poids ;
du fer dans une quantité de 0,0001 % à 0,50 % en poids ;
de l'antimoine dans une quantité de 0,0001 % à 0,50 % en poids ; et / ou
du cadmium dans une quantité de 0,0001 % à 0,50 % en poids,
dans lequel l'alliage a une conductivité électrique dans la plage de 12 à 25 % IACS,
et dans lequel l'article est une pièce de monnaie, un jeton ou un fusible.

2. Article selon la revendication 1, comprenant en outre une couche de placage sur ledit alliage.
